# EUROPÄISCHE PATENTSCHRIFT

(11) **EP 0 864 460 B1**
(45) Veröffentlichungstag und Bekanntmachung des Hinweises auf die Patenterteilung: **23.01.2002**
(21) Anmeldenummer: 97104885.5
(22) Anmeldetag: 21.03.1997
(51) Int. Cl.: B60N 2/44, B60R 21/20

(54) **Autositzbezüge**
Car seat cover
Couverture de siège de véhicule

(30) Priorität: 13.03.1997 DE 29704593 U
(43) Veröffentlichungstag der Anmeldung: 16.09.1998
(73) Patentinhaber: Diana KFZ-Textil GmbH, 92637 Weiden (DE)
(72) Erfinder: Unger, Angelika, 92637 Weiden (DE)
(74) Vertreter: Kern, Wolfgang, Dipl.-Ing.

(56) Entgegenhaltungen:
- DE-U- 29 620 382
- US-A- 5 498 030
- US-A- 5 588 671
- US-A- 5 601 332
- PATENT ABSTRACTS OF JAPAN vol. 097, no. 002, 28. Februar 1997 & JP 08 258661 A (IKEDA BUSSAN CO LTD), 8. Oktober 1996

## Beschreibung

Die Erfindung betrifft Autositzbezüge, beispielsweise Schonbezüge, die auf den Polstern der Rück- und Vordersitze von Pkws anbringbar sind, bestehend aus Lehnenteilen und Sitzteilen.

Derartige Autositzbezüge sind beispielsweise aus dem Gbm 296 20 130 bekannt. Für Pkws besteht seitens der Hersteller Ausstattungspflicht mit diversen Sicherheitssystemen, zu denen insbesondere der Anschnallgurt gehört. In den letzten Jahren sind diese Systeme durch Airbags komplettiert worden, die sich bei Frontalaufprall und Seitenaufprall des Fahrzeugs auf Hindernisse in Sekundenbruchteilen mittels Treibgasen explosionsartig aufblasen. In den Fällen, in denen derartige Seitenairbags in den Autositzen untergebracht sind, welche vom Fahrzeughalter mit Bezügen, beispielsweise Schonbezügen, versehen werden, soll einerseits das explosionsartige Aufblasen der Seitenairbags nicht behindert werden, andererseits vermieden werden, daß die Sitzbezüge unkontrolliert aufreißen und möglicherweise vollständig zerstört werden.

Hierzu leistet die Erfindung einen Beitrag, indem sie vorschlägt, daß sich bei Autositzbezügen, deren Lehnenteile und Sitzteile auf ihren den Fahrzeugtüren zugewandten Seiten Sollbruchstellen für in der Lehne bzw. dem Sitz befindliche Seitenairbags aufweisen, die aus wenigstens einer Naht bestehen, deren Festigkeit so ausgelegt ist, daß sie beim Explodieren des Airbags aufreißt und den Airbag ungehindert aus der betreffenden Seitenbacke der Lehne bzw. des Sitzes des Autositzes austreten läßt, sich die Naht entlang der Seitenbackenbegrenzungskante der Lehne bzw. des Sitzes erstreckt und ihre Länge von Einschnitten im Bezug begrenzt ist, die ein Aufreißen des Lehnenteils bzw. Sitzteils des Bezugs über die Nahtenden hinaus verhindern.

Aus der US-A-5 498 030 sind Airbagmodule bekannt, die innerhalb der Schaumstoffpolsterung von Autositzen angeordnet sind, welche von einem Bezugsstoff umgeben werden, der im Bereich der Austrinsstelle des Airbags eine Schwächungsnaht aufweist, die beim explosionsartigen Aufblasen des Airbags und seinem Austreten aus der Polsterung aufreißt und somit die Entfaltung des Airbags außerhalb der Sitzpolsterung nicht behindert. Für den Fall, daß über dem Bezugsstoff einer solchen Polsterung ein Autositzbezug beispielsweise in Form eines Schonbezugs angeordnet wird, dann ist dieser so zu gestalten, daß auch er die Ausbreitung der Airbags nicht behindert.

Vorteilhafte Ausgestaltungen der Erfindung sind in den Unteransprüchen gekennzeichnet.

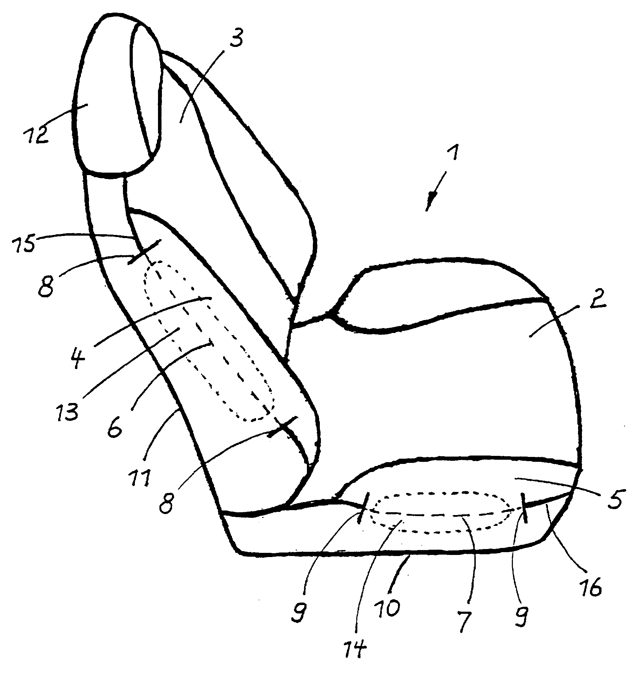

Die Erfindung wird im folgenden an Hand des in der Zeichnung dargestellten Ausführungsbeispiels näher erläutert, das in perspektivischer Seitenansicht einen mit Seitenairbags ausgestatteten Fahrzeugsitz zeigt, der mit Sitzüberzügen versehen ist.

Der in der Zeichnung dargestellte Autositz 1 kann ein Vordersitz, aber auch ein Rücksitz eines Pkws sein, wobei für den Fall eines Rücksitzes die angestellten Betrachtungen gleichermaßen auch für die Rücksitzbank eines Pkws gelten sollen.

Der dargestellte Autositz besteht wie üblich aus dem eigentlichen Sitz 10, der Lehne 11 und der Kopfstütze 12. Er ist auf seiner der Fahrzeugtür zugewandten Seite mit in die Polsterung eingebauten Seitenairbags 13, 14 ausgestattet, die von der Polsterung abgedeckt werden und sich im Kollisionsfall explosionsartig mit Hilfe eines Treibmittels aufblasen. Diese Seitenairbags sind schematisch durch eine punktierte Begrenzung in der Zeichnung angedeutet. Sie liegen also unter dem Sitzüberzug, der aus einem Lehnenteil 3 und einem Sitzteil 2 besteht.

Damit die Seitenairbags beim explosionsartigen Aufblasen möglichst ungehindert aus den Seitenbacken 4, 5 der Lehne 11 bzw. des Sitzes 10 austreten können und der Bezug dadurch nicht willkürlich aufreißt, sind der Sitzteil 2 und der Lehnenteil 3 des Bezuges mit einer Sollbruchstelle in Form einer Naht 6 bzw. 7 versehen, deren Festigkeit so ausgelegt ist, daß sie beim Explodieren des Airbags aufreißt und den Airbag ungehindert austreten läßt.

Die Nähte 6, 7 erstrecken sich entlang der Seitenbackenbegrenzungskanten 15, 16 von Lehne und Sitz, und damit sie nicht unbegrenzt aufreißen, wenn die Seitenairbags explodieren, werden sie an ihren Enden durch Einschnitte 8, 9 im Bezug begrenzt, die mit Gummi eingefaßt sind.

## Patentansprüche

1. Autositzbezüge, beispielsweise Schonbezüge, die auf den Polstern der Rück- und Vordersitze von Pkws anbringbar sind, bestehend aus Lehnenteilen (3) und Sitzteilen (2), wobei die Lehnenteile (3) und/oder Sitzteile (2) der Bezüge auf ihren den Fahrzeugtüren zugewandten Seiten Sollbruchstellen für in der Lehne (11) bzw. dem Sitz (10) befindliche Seitenairbags (13, 14) aufweisen, die aus wenigstgens einer Naht (6, 7) bestehen, deren Festigkeit so ausgelegt ist, daß sie beim Explodieren der Airbagss (13, 14) aufreißt und den Airbag ungehindert aus der betreffenden Seitenbacke der Lehne (11) bzw. des Sitzes (10) des Autositzes (1) austreten läßt, wobei sich die Naht (6, 7) entlang der Seitenbackenbegrenzungskante (15, 16) der Lehne (11) bzw. des Sitzes (10) erstreckt und ihre Länge von Einschnitten (8, 9) im Bezug begrenzt ist, die ein Aufreißen des Lehnenteils (3) bzw. Sitzteils (2) des Bezugs über die Nahtenden hinaus verhindern.

2. Autositzbezüge nach Anspruch 1, **dadurch gekennzeichnet, daß** die Einschnitte (8, 9) mit Gummi eingefaßt sind.

3. Autositzbezüge nach Anspruch 1 oder 2, **dadurch gekennzeichnet, daß** die Sollbruchstellen der Lehnenteile (3) bzw. Sitzteile (2) der Bezüge sowohl in den Bezügen der Vordersitze als auch der Rücksitze des Pkws angeordnet sind.

## Claims

1. Car seat covers, for instance protective covers, arranged on the upholstery of the back seats and front seats of cars, comprising upper seat back portions (3) and seat bottom portions (2), which upper seat back portions (3) and/or seat bottom portions (2) of the covers are provided with frangible seat seams in the sides opposite to the car doors, which frangible seat seams are provided for side airbags (13, 14) within the upper seat back portion (3) or the seat bottom portion (2), respectively, consisting of at least one seam (6, 7) the strength of which being such that if the airbags (13, 14) are exploding the seams are breaking and the airbags leave without resistance the lateral portion of the upper seat back portion (3) or the seat bottom portion (2), respectively, of the car seat (1), the configuration being such that the seam (6, 7) extends along the lateral portion limiting edge (15, 16) of the upper seat back portion (3) or the seat bottom portion (2), respectively, and its length is limited by cuts (8, 9) within the cover, which avoid that the cover of the upper seat back portion (3) or seat bottom portion (2), respectively, of the cover breaks beyond the ends of the seam

2. Car seat cover according to claim 1, **characterized in that** the cuts (8, 9) are bounded by indian-rubber.

3. Car seat covers according to claim 1 or 2, **characterized in that** the frangible seat seam of the upper seat back portion (3) or seat bottom portion (2), respectively, of the covers are provided within the covers of the front seats as well as the back seats of the car.

## Revendications

1. Housses de sièges de voiture, par exemple housses de protection, susceptibles d'être posées sur les rembourrages des sièges arrière et avant de voitures particulières, comprenant des parties d'appui (3) et des parties d'assise (2), les parties d'appui (3) et/ou parties d'assise (2) des housses présentant, sur leurs faces orientées vers les portes du véhicule, des points destinés à la rupture pour des coussins de sécurité latéraux (13, 14) se trouvant dans le dossier (11) et/ou dans le siège (10), qui sont constitués d'au moins une couture (6, 7), dont la solidité est conçue de telle sorte qu'elles s'ouvrent lorsque les coussins de sécurité (13, 14) explosent et qu'elles laissent sortir le coussin de sécurité, sans entrave, hors du renflement latéral correspondant du siège (11) et/ou de la partie formant siège (10) du siège de voiture (1), ta couture (6, 7) s'étendant le long de l'arête de délimitation du renflement latéral (15, 16) du dossier (11) et/ou du siège (10) et sa longueur étant limitée par des entailles (8, 9) pratiquées dans la housse, qui empêchent une déchirure de la partie d'appui (3) et/ou de la partie d'assise (2) de la housse au-delà des extrémités des coutures.

2. Housses de sièges de voiture selon la revendication 1, **caractérisées en ce que** les entailles (8, 9) sont borées de caoutchouc.

3. Housses de sièges de voiture selon la revendication 1 ou 2, **caractérisées en ce que** les points destinés à la rupture des parties d'appui (3) et/ou des parties d'assise (2) des housses sont prévus aussi bien dans les housses des sièges avant que dans celles des sièges arrière de la voiture particulière.
